# EUROPEAN PATENT SPECIFICATION

(11) **EP 0 601 247 B1**
(45) Date of publication and mention of the grant of the patent: **04.11.1998**
(21) Application number: 92311221.3
(22) Date of filing: 09.12.1992
(51) Int. Cl.: G11B 15/68

(54) **Picker apparatus**
Greifvorrichtung
Dispositif de préhension

(43) Date of publication of application: 15.06.1994
(73) Proprietor: Hewlett-Packard Limited, Bracknell, Berkshire RG12 1HN (GB)
(72) Inventor: Williams, Phillip Roy, Bradley Stoke North Bristol, BS12 0ES (GB)
(74) Representative: Lawman, Matthew John Mitchell

(56) References cited:
- EP-A- 0 261 410
- US-A- 4 907 889
- US-A- 4 984 108
- PATENT ABSTRACTS OF JAPAN vol. 15, no. 144 (P-1189)11 April 1991 & JP-A-3 019 167 ( HITACHI ) 28 January 1991

## Description

### Technical Field

This invention relates to picker apparatus, and particularly though not exclusively to picker apparatus for use in autochangers intended for use with digital audio tape (DAT) cartridges.

### Background Art

DAT mechanisms conforming to the 'DAT Conference Standard' are known for recording and replaying audio signals on magnetic tape. Such mechanisms are also used for storage and retrieval of digital data, for example for use with computers, in accordance with the DDS (digital data storage) standard.

In both cases the magnetic tape for storing the digital signals is housed in a cartridge (also called a cassette) having standardized dimensions and physical features. These features include a shallow housing with a sliding cover on its underside and a pivoted lid along one edge, the lid being held closed by abutment against one end of the sliding cover while the cartridge is not in use.

Although the data storage capacity of a DDS tape is very high, of the order of gigabytes, there is a need for systems providing an even higher capacity. One way of providing such an increase is by the use of a tape autochanger system, in which any selected cartridge can be automatically loaded into a DDS record/replay mechanism from a magazine housing several cartridges; such an autochanger, for use with a six-cartridge magazine, is described in co-pending European patent application No. 92 3 04 388.9. This autochanger can be accommodated within the dimensions ('form factor') occupied by a standard 5 1/4" full-height disk drive for a desktop personal computer.

An important component of an autochanger is the so-called picker, which is used to grasp tape cartridges for transfer by the autochanger between the magazine and the DDS record/replay mechanism. The picker must be able to grasp a cartridge securely, irrespective of slight variations in cartridge design, but must be very small and compact to fit within the confined space available within the autochanger housing, and in particular within and around the cartridges housed in the magazine.

A picker is described in US Patent 4,984,108. The picker described therein is designed to handle different sizes of cassette. This is achieved by having a gripper assembly comprising three pairs of lower fingers, at progressively higher elevations, and an upper finger. The lower fingers are spring biased towards the upper finger to grip a cassette inserted therebetween. The lower fingers each have a ridge on an upper surface thereof to mate with a groove on the underside of an inserted cassette in order to effect precise positioning of the cassette.

It is an object of this invention to provide an improved picker apparatus.

### Disclosure of Invention

According to one aspect of this invention there is provided a picker apparatus for releasably engaging a DAT cartridge having spaced sides and a rib extending between said sides, comprising a support arranged for translational movement along a predetermined path and two picker means mounted on the support for movement with a component of motion towards one another, characterised in that each picker means has two opposed faces oriented relative to one another to define a tapered opening, whereby upon movement of said picker means towards a DAT cartridge located therebetween said tapered openings accommodate respective sides of the cartridge and a portion of each picker means engages said rib for movement of the cartridge with the support along said predetermined path.

The picker means may be mounted on the support for rotation about spaced axes parallel to one another and transverse to said predetermined path; the opposed faces on each picker means may be inclined away from each other in a direction facing the other picker means.

Preferably each of the picker means has a tooth to engage said rib of said cartridge; this tooth may have a lower one of the two inclined opposed faces on its upper side. This tooth may also have a rear face disposed transversely to said predetermined path for engagement with cartridge rib, and a front face inclined outwardly relative to this rear face and defining with the rear face a wedge-shaped end to the tooth. Such a wedge-shaped end assists engagement of the picker means with a cartridge even when the cartridge is loaded in a DDS record/replay mechanism and has its sliding cover open and therefore close to the rib.

Each picker means may also have an upper tooth disposed thereon to engage an upper edge of said cartridge, and this tooth may have an upper one of said inclined opposed faces on its lower side, to engage with the cartridge upper edge.

### Brief Description of Drawings

A picker apparatus in accordance with this invention will now be described, by way of example, with reference to the accompanying drawings, in which:
- Figures 1*a* and 1*b*: show a standard DAT cartridge;
- Figure 2: is a cutaway view of an autochanger incorporating the picker apparatus ;
- Figures 3 and 4: are perspective views of the picker apparatus;
- Figure 5: is a perspective view of a picker finger forming part of the picker apparatus of Figures 3 and 4;
- Figures 6 to 9: are elevation and plan views of the picker finger;
- Figure 10: is a view from the rear of a DAT cartridge showing the picker finger engaging the cartridge; and
- Figure 11: is a view from the side of a DAT cartridge showing the picker finger engaging the cartridge.

### Best Mode for Carrying Out the Invention, & Industrial Applicability

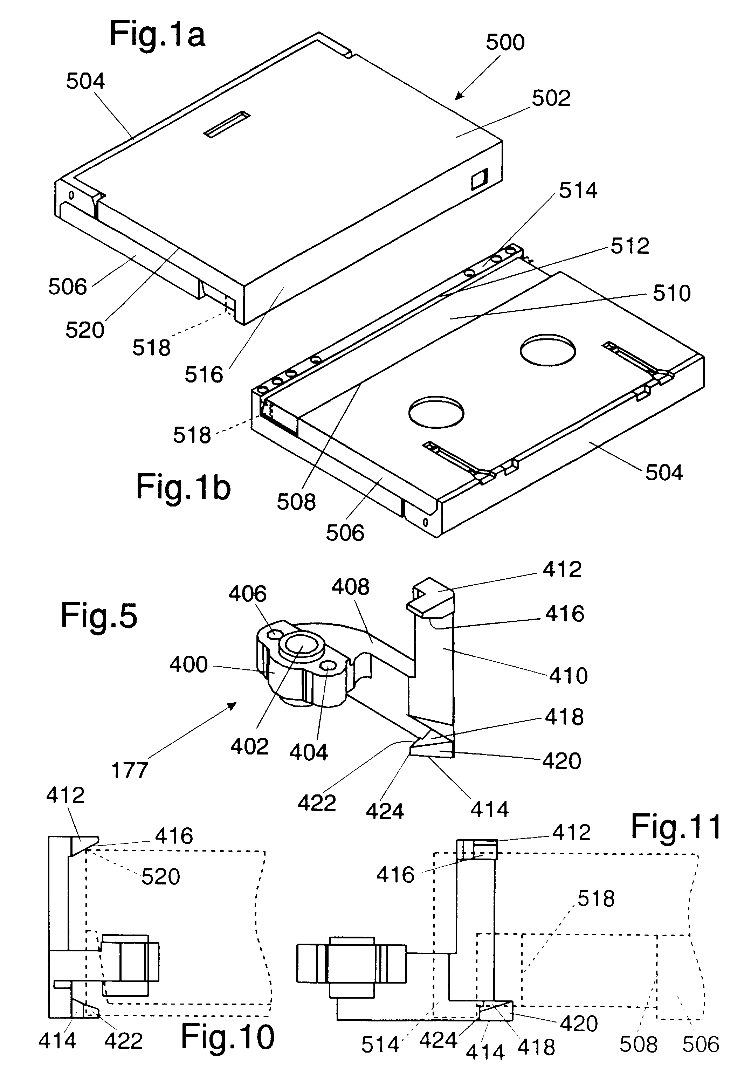

The picker apparatus described below is intended for use with tape cartridges conforming to the DAT Conference Standard, such as is shown at 500 in Figures 1*a* and 1*b*. This cartridge 500 has a generally rectangular body shell 502 enclosing two spools with a length of 4 mm wide magnetic tape wound around and extending between them. Access to the tape is obtained via an opening along one long edge of the cartridge, under a pivoted lid 504 which is spring-loaded into a closed position covering the opening when the cartridge is not in use. The lid 504 is locked in this position by a sliding cover 506 which wraps around the underside of the cartridge 500 and extends beneath arms at each end of the lid, and is normally held closed by locking tabs which protrude from the body shell through apertures in elongate recesses in the surface of the cover. When the sliding cover 506 is in its closed position its rear edge 508 is spaced from the rear of the cartridge, defining a channel 510 which extends across the width of the cartridge and partially up its sides, behind the sliding cover. The rear wall 512 of this channel is formed by a rib 514 extending between the channel 510 and the rear face 516 of the cartridge. In some cases the channel 510 may be partially closed on each side of the cartridge by a wall section 518 (shown dashed in the Figures) extending forwards and downwards from the upper rear corner of the channel.

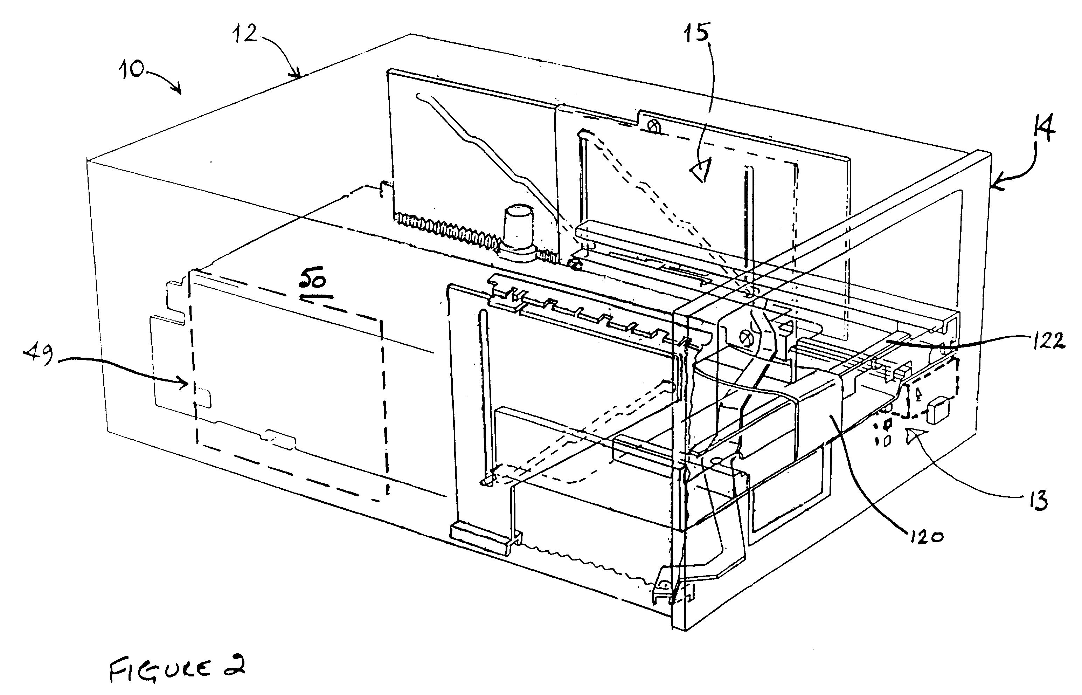

Referring to Figure 2, an autochanger for use with such cartridges is indicated generally at 10 and comprises a housing 12 (shown in outline only) and a front panel 14. At the base of the rear of the housing 12 there is located a tape drive mechanism 50 (shown in outline), for example that used in existing Hewlett-Packard product number HP35480, minus parts of the standard housing for that product. At the front of the housing 12 is a transfer mechanism 13 for transferring tape cartridges from a storage position to the tape drive mechanism 50. In the upper part of the housing 12 is a storage area 15 for receiving a rotatable magazine (not shown) containing up to six tape cartridges. Also housed along one side of the housing 12 is a printed circuit board 49 (shown in outline only) for controlling the operation of the autochanger 10.

The cartridge transfer mechanism 13 includes a vertically movable platform 120 and a picker apparatus 122 mounted thereon for grasping a tape cartridge adjacent its rear face 516 and moving it between the platform 120 and either a magazine or the tape drive mechanism 50. The following description primarily concerns this picker apparatus, so other parts of the cartridge transfer mechanism and the remainder of the autochanger 10 will not be described here; further details of those components are given in the above-mentioned European patent application No. 92 3 04 388.9.

The picker apparatus as described herein differs in various respects from the apparatus described in that European patent application. However, the overall function of the apparatus remains unchanged, and the changes do not significantly affect its cooperation with the remainder of the autochanger. Accordingly, for the sake of clarity no particular emphasis will be placed on changes which are incidental to the present invention. Components of the picker apparatus which correspond to components described in European patent application No. 92 3 04 388.9 have been given like reference numerals herein.

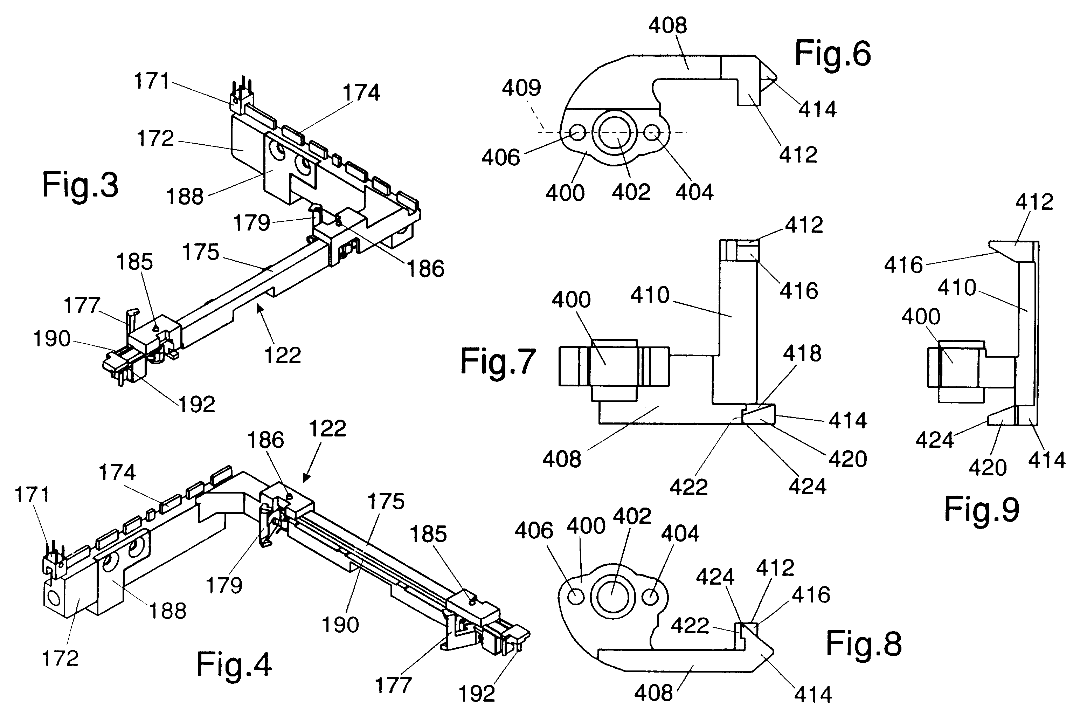

Referring to Figures 3 and 4, the picker apparatus 122 may be made for example of plastic or aluminium, and is generally L-shaped, with a side arm 172 arranged to fit slidably on the side of the platform 120. The side arm 172 has a clamp 188 for attachment of a drive belt (not shown), to permit the side arm 172 to be moved slidably over the platform 120 by a motor located under the platform 120. A wall 174 along the upper side of the side arm 172 has notches which are detectable by a C-shaped sensor 171 mounted on the platform 120, to provide information concerning the position of the picker apparatus 122 on the platform 120 for controlling the drive belt motor.

A front arm 175 of the picker apparatus 122 extends across the width of the platform 120 and carries two picker fingers 177 and 179 (corresponding generally to, but configured differently from, the picker fingers 178 and 180 as described in European patent application No. 92 3 04 388.9). These picker fingers are pivotally mounted on the arm 175 for rotation about axes parallel to one another and transverse to the direction of movement of the picker apparatus 122 over the platform 120. Each picker finger 177, 179 is spring-biassed inwardly (i.e. towards the other picker finger) by means of a torsion spring around its respective pivot pin 185, 186. These torsion springs also apply a downward bias to the picker fingers 177,179, in order to compensate for the effects of component tolerances on the relative positions of the picker fingers and a DAT cartridge. Two rods 190 and 192 extend along the front arm 175 from its free end, remote from the side arm 172. The rod 190 is the longer of the two and reaches to the picker finger 179 adjacent the side arm 172; the other rod 192 is shorter and reaches to the picker finger 177.

The picker finger 177 is shown in greater detail in Figures 5 to 9; the other picker finger 179 is a mirror-image copy. Referring to Figures 5 to 9, the picker finger 177 has a hub 400 with a central hole 402 to receive the pivot pin 185 and inner and outer peripheral holes 404 and 406. An arm 408 extends tangentially from the hub 400, parallel to a line (referenced 409 in Figure 6) joining the holes 402 to 406, and carries an upwardly extending post 410 at its end. An upper tooth 412 extends transversely from the top of the post 410. towards the line 409, and a lower tooth 414 extends parallel to the tooth 412 from the foot of the post 410.

The upper tooth 412 has a downwardly-directed face 416 on its lower side. inclined upwards and outwards (i.e. away from the post 410). The lower tooth 414 has an upwardly-directed face 418 on its upper side, inclined downwards and outwards, a front or outer face 420 (i.e. facing away from the hub 400) inclined outwards and backwards (towards the hub 400) and a vertical rear face 422 transverse to the arm 408. These three faces 418, 420 and 422 intersect to form a wedge-shaped end 424. As is best shown in Figure 9, the upper and lower inclined faces 416 and 418, on the upper and lower teeth 412 and 414 respectively, define between them an opening which tapers in towards the post 410.

The picker finger 177 is mounted on the front arm 175 with its hub 400 in a recess in the arm and its arm 408 extending out on the same side as the side arm 172, and its teeth 412 and 414 facing towards the side arm 172. The mirror-image picker finger 179 is mounted similarly, with its teeth facing away from the side arm 172 and thus towards the teeth of the picker finger 177.

The rod 190 on the front arm 175 has a downward projection at its end adjacent the picker finger 179 and this projection fits into the inner peripheral hole 404 on the hub 400 of the picker finger (i.e. the hole on the same side of the hub as the arm 408). The shorter rod 192 has a similar downward projection which fits into the outer peripheral hole 406 on the hub of the picker finger 177 (i.e. the hole on the other side of the hub from the arm 408). If the ends of the rods 190 and 192 at the free end of the front arm 175 are urged towards the side arm 172, they act to rotate the picker fingers 177 and 179 away from one another around their respective pivot pins, so that they splay outwardly e.g. to release their grip on a DAT cartridge. The operation of the rods 190 and 192 may be by way of a solenoid and a pivoted plate, as described in European patent application No. 92 3 04 388.9.

When operation of the autochanger requires gripping of a DAT cartridge (for its insertion into or extraction from a magazine or the tape drive mechanism), the picker apparatus 122 is moved rearwards relative to the platform 120 towards the DAT cartridge. At the appropriate point during this motion, as sensed by the sensor 171, the rods 190 and 192 are actuated to splay the picker fingers 177 and 179 so that they clear the rear face 516 of the DAT cartridge. When the front arm 175 abuts the rear face 516 of the cartridge, the motion of the picker apparatus 122 is halted.

The rods 190 and 192 are allowed to return to their rest positions, in turn allowing the picker fingers 177 and 179 to spring against the rear side portions of the cartridge. As shown in Figures 10 and 11, the inclined face 416 on the upper tooth 412 of each picker finger engages the upper edge 520 of the adjacent cartridge side wall (shown in dashed line); the inclined face 418 on the lower tooth 414 engages the lower edge of the wall section 518 (if this wall section is present). In addition, the rear face 422 on the lower tooth 414 slides in front of the front face of the rib 514 which forms the rear of the channel 510. Thus, when the picker apparatus 122 is moved forwards relative to the platform 120, to withdraw the cartridge from a magazine or from the tape drive mechanism 50, the lower tooth 414 engages positively with the rib 514, providing a secure, reliable grip on the cartridge.

If the cartridge is being removed from the tape drive mechanism 50, the sliding cover 506 of the cartridge will be in its open position, with its rear edge 508 adjacent the rib 514. Accordingly the space available for insertion of the lower tooth 414 of the each picker finger 177, 179 will be restricted. However, the wedge-shaped end 424 of this tooth ensures that the tooth can enter this restricted space sufficiently for the rear face 422 of the tooth to engage reliably with the rib 514.

After the cartridge has been withdrawn from the magazine or tape drive mechanism by the picker apparatus 122, its motion is halted and the platform 120 is moved up or down as appropriate into proximity with the intended destination for the cartridge. The picker apparatus 122 is then moved rearwards relative to the platform 120 once more, to push the cartridge into the tape drive mechanism 50 or the magazine as appropriate. When the cartridge has reached the correct position, as indicated by the sensor 171, the rods 190 and 192 are actuated again to splay the picker fingers 177 and 179 and release their grip on the cartridge.

Various modifications can be made to embodiment described above. Thus, for example, the inclined faces 416 and 418 could be arcuate rather than planar. Instead of both these faces on a picker finger being inclined relative to the DAT cartridge, one or other face could be generally parallel to the top and bottom of the cartridge shell.

## Claims

1. Picker apparatus for releasably engaging a DAT cartridge having spaced sides and a rib extending between said sides, comprising a support (172,175) arranged for translational movement along a predetermined path and two picker means (177,179) mounted on the support for movement with a component of motion towards one another, characterised in that each picker means has two opposed faces (416,418) oriented relative to one another to define a tapered opening, whereby upon movement of said picker means towards a DAT cartridge located therebetween said tapered openings accommodate respective sides of the cartridge and a portion (422) of each picker means engages said rib for movement of the cartridge with the support (172,175) along said predetermined path.

2. The apparatus of claim 1, wherein said picker means (177,179) are mounted on the support (172,175) for rotation about spaced axes parallel to one another and transverse to said predetermined path.

3. The apparatus of claim 1 or claim 2, wherein said opposed faces (416,418) on each picker means (177,179) are inclined away from each other in a direction facing the other picker means.

4. The apparatus of any one of the preceding claims, wherein each said picker means (177,179) has a tooth (414) disposed thereon to engage said rib of said cartridge.

5. The apparatus of claim 4, wherein said tooth (414) has a lower one (418) of said inclined opposed faces on its upper side.

6. The apparatus of claim 4 or claim 5, wherein said tooth (414) has a rear face (422) disposed transversely to said predetermined path for engagement with said rib of said cartridge.

7. The apparatus of claim 6, wherein said tooth (414) has a front face (420) inclined outwardly relative to said rear face (422) and defining therewith a wedge-shaped end (424) to the tooth.

8. The apparatus of any one of the preceding claims, wherein each said picker means (177,179) has an upper tooth (412) disposed thereon to engage an upper edge of said cartridge.

9. The apparatus of claim 8, wherein said upper tooth (412) has an upper one (416) of said inclined opposed faces on its lower side.

## Patentansprüche

1. Eine Aufnahmevorrichtung zum lösbaren Ineingriffnehmen einer DAT-Kassette mit beabstandeten Seiten und einer Rippe, die sich zwischen den Seiten erstreckt, wobei die Aufnahmevorrichtung einen Träger (172, 175), der für eine Translationsbewegung entlang eines vorbestimmten Weges angeordnet ist, und zwei Aufnehmereinrichtungen (177, 179) aufweist, die auf dem Träger für eine Bewegung mit einer aufeinander zu gerichteten Bewegungskomponente angebracht sind, dadurch gekennzeichnet, daß jede Aufnehmereinrichtung zwei gegenüberliegende Seiten (416, 418) aufweist, die zueinander ausgerichtet sind, um eine sich verjüngende Öffnung zu definieren, wodurch bei einer Bewegung der Aufnehmereinrichtungen auf eine DAT-Kassette zu, die zwischen denselben angeordnet ist, die sich verjüngenden Öffnungen jeweilige Seiten der Kassette aufnehmen, und ein Abschnitt (422) jeder Aufnehmereinrichtung die Rippe für eine Bewegung der Kassette mit dem Träger (172, 175) entlang des vorbestimmten Wegs in Eingriff nimmt.

2. Die Vorrichtung gemäß Anspruch 1, bei der die Aufnehmereinrichtungen (177, 179) auf dem Träger (172, 175) für eine Drehung um beabstandete Achsen, die parallel zueinander und quer zu dem vorbestimmten Weg angeordnet sind, angebracht sind.

3. Die Vorrichtung gemäß Anspruch 1 oder 2, bei der die gegenüberliegenden Seiten (416, 418) auf jeder Aufnehmereinrichtung (177, 179) in einer Richtung, die auf die andere Aufnehmereinrichtung gerichtet ist, voneinander weg geneigt sind.

4. Die Vorrichtung gemäß einem der vorhergehenden Ansprüche, bei der jede der Aufnehmereinrichtungen (177, 179) einen Zahn (414) aufweist, der auf denselben angeordnet ist, um die Rippe der Kassette in Eingriff zu nehmen.

5. Die Vorrichtung gemäß Anspruch 4, bei der der Zahn (414) eine untere (418) der geneigten gegenüberliegenden Seiten auf seiner oberen Seite aufweist.

6. Die Vorrichtung gemäß Anspruch 4 oder 5, bei der der Zahn (414) eine Rückseite (422) aufweist, die quer zu dem vorbestimmten Weg für eine Ineingriffnahme mit der Rippe der Kassette angeordnet ist.

7. Die Vorrichtung gemäß Anspruch 6, bei der der Zahn (414) eine Vorderseite (420) aufweist, die bezüglich der Rückseite (422) nach außen geneigt ist und mit derselben ein keilförmiges Ende (424) an dem Zahn definiert.

8. Die Vorrichtung gemäß einem der vorhergehenden Ansprüche, bei der jede der Aufnehmereinrichtungen (177, 179) einen oberen Zahn (412) aufweist, der auf denselben angeordnet ist, um einen oberen Rand der Kassette in Eingriff zu nehmen.

9. Die Vorrichtung gemäß Anspruch 8, bei der obere Zahn (412) eine obere (416) der geneigten gegenüberliegenden Seiten auf seiner unteren Seite aufweist.

## Revendications

1. Appareil de prélèvement destiné à venir en prise de façon libérable sur une cartouche de bande audionumérique à côtés espacés entre lesquels s'étend une nervure, comprenant un support (172, 175) agencé pour se déplacer en translation le long d'un trajet prédéterminé et deux moyens de prélèvement (177, 179) montés sur le support pour un déplacement dont une composante de mouvement est dirigée de chacun d'eux vers l'autre, caractérisé en ce que chaque moyen de prélèvement comporte deux faces opposées (416, 418) orientées l'une par rapport à l'autre de manière à définir une ouverture effilée, afin que lesdites ouvertures effilées reçoivent des côtés respectifs de la cartouche lorsque lesdits moyens de prélèvement ont été déplacés vers une cartouche de bande audionumérique située entre eux, et qu'une partie (422) de chaque moyen de prélèvement vienne alors en prise avec ladite nervure afin de déplacer la cartouche ainsi que le support (172, 175) le long dudit trajet prédéterminé.

2. L'appareil selon la revendication 1, dans lequel lesdits moyens de prélèvement (177, 179) sont montés, sur le support (172, 175), à rotation autour d'axes espacés parallèles l'un à l'autre et transversaux audit trajet prédéterminé.

3. L'appareil selon la revendication 1 ou la revendication 2, dans lequel lesdites faces opposées (416, 418) de chaque moyen de prélèvement (177, 179) sont inclinées, en s'éloignant l'une de l'autre, dans une direction qui fait face à l'autre moyen de prélèvement.

4. L'appareil selon l'une quelconque des revendications précédentes, dans lequel chacun desdits moyens de prélèvement (177, 179) comporte une dent (414) qui y est disposée de manière à venir en prise avec ladite nervure de ladite cartouche.

5. L'appareil selon la revendication 4, dans lequel ladite dent (414) comporte sur son côté supérieur une face inférieure (418) qui constitue l'une desdites faces opposées inclinées.

6. L'appareil selon la revendication 4 ou la revendication 5 dans lequel ladite dent (414) comporte une face arrière (422) disposée transversalement audit trajet prédéterminé pour venir en prise avec ladite nervure de ladite cartouche.

7. L'appareil selon la revendication 6, dans lequel ladite dent (414) comporte une face frontale (420) inclinée vers l'extérieur par rapport à ladite face arrière (422) et définissant avec elle pour la dent une extrémité (424) à configuration de coin.

8. L'appareil selon l'une quelconque des revendications précédentes, dans lequel chacun desdits moyens de prélèvement (177, 170) comporte une dent supérieure (412) qui y est disposée de manière à venir en prise avec un bord supérieur de ladite cartouche.

9. Appareil selon la revendication 8 dans lequel ladite dent supérieure (412) comporte sur son côté inférieur une face supérieure (416) qui constitue l'une desdites faces opposées inclinées.
